# EUROPEAN PATENT APPLICATION

(11) **EP 1 707 091 A1**
(43) Date of publication of application: **04.10.2006**
(21) Application number: 05007103.4
(22) Date of filing: 31.03.2005
(51) Int. Cl.: A47J 42/04, A47J 42/46

(54) **Dual-purpose grinder for seasoning**

(71) Applicant: Duo Yeu Metal Co., Ltd., Tainan Hsien (TW)
(72) Inventor: Wang, Chih-Hung, Tainan Hsien (TW)
(74) Representative: Kador & Partner

(57) **Abstract**

A seasoning grinder includes two containing parts (1) joined together at first ends; each containing part holds a transmission mechanism (3) in the first end, and a grinding mechanism (2) in a second end thereof; the containing parts hold different kinds of seasonings therein; a separating member (4), which is equipped with a spring, is secured in the first ends of the containing parts, and two pressed members (5), which face in opposite directions, are connected to the containing parts; the transmission mechanisms (3) are connected to the separating member (4), and respectively connected to the pressed members (5) such that when the grinder is held upright, and when the lateral pressed members (5) are pressed and loosened repeatedly, a lower one of the transmission mechanisms will function to pass on movement to the corresponding lower grinding mechanism, and seasoning held in the containing part will be ground.

## Description

### BACKGROUND OF THE INVENTION

### 1. Field of the invention

The present invention relates to a dual-purpose grinder for seasoning, more particularly one, which includes two lateral pressed members facing in opposite directions, and two containing parts joined together at first ends and connected to the lateral pressed members such that when the grinder is held in an upright position, and when the lateral pressed members are pressed and loosened repeatedly, a transmission mechanism held in a lower one of the containing parts will function to pass on movement to a grinding mechanism held in the lower containing part, and seasoning held in the lower containing part will be ground by the lower grinding mechanism.

### 2. Brief Description of the Prior Art

A very common seasoning grinder includes an upper holding part, a lower holding part, a shaft securely connected to the upper holding part at an upper end, a cone-shaped tooth-equipped member secured to a lower end of the shaft, and a ring-shaped tooth-equipped member secured in the lower holding part. The lower holding part is connected to a lower end of the upper holding part at an upper end thereof such that the upper and the lower holding parts can be turned relative to each other, and such that the cone-shaped tooth-equipped member is held in ring-shaped tooth-equipped member. Thus, when the upper holding part is turn relative to the lower holding part, the cone-shaped tooth-equipped member will turn relative to the ring-shaped tooth-equipped member to grind seasoning into powder, which will drop out from the lower end of the lower holding part.

However, the conventional seasoning grinder has the following disadvantages:
1. To use the grinder, the user has to hold the lower holding part with one hand, and the upper grinding part with the other, and he/she has to turn the upper holding part while exerting force on the lower holding part to prevent the lower holding part from turning in the same direction as the upper holding part. Therefore, the grinder isn't convenient to use.
2. The grinder can only be used to hold one kind of seasoning, and the user has to buy as many grinders of such kind as the number of kinds of his/her seasonings, which will occupy much space. Therefore, the grinder is not economical to use.

### SUMMARY OF THE INVENTION

It is a main object of the invention to provide a dual-purpose grinder for seasoning to provide the user with convenience.

The seasoning grinder of the present invention includes two containing parts, which are joined together at first ends, and each of which holds a transmission mechanism in the first end, and a grinding mechanism in a second end thereof. The containing parts hold different kinds of seasonings therein. A separating member, which is equipped with a spring, is secured in the first ends of the containing parts. And, two pressed members, which face in opposite directions, are connected to the containing parts. The transmission mechanisms are connected to the separating member, and respectively connected to the pressed members such that when the grinder is held upright, and when the lateral pressed members are pressed and loosened repeatedly, a lower one of the transmission mechanisms will function to pass on movement to the corresponding lower grinding mechanism. Consequently, seasoning will be ground by the lower grinding mechanism.

### BRIEF DESCRIPTION OF THE DRAWINGS

The present invention will be better understood by referring to the accompanying drawings, wherein:
Fig. 1 is an exploded perspective view of the dual-purpose grinder for seasoning according to the present invention,
Fig. 2 is a fragmentary exploded perspective view of the dual-purpose grinder of the present invention,
Fig. 3 is a vertical section of the dual-purpose grinder of the present invention,
Fig. 4 is a partial vertical section of the grinder of the invention,

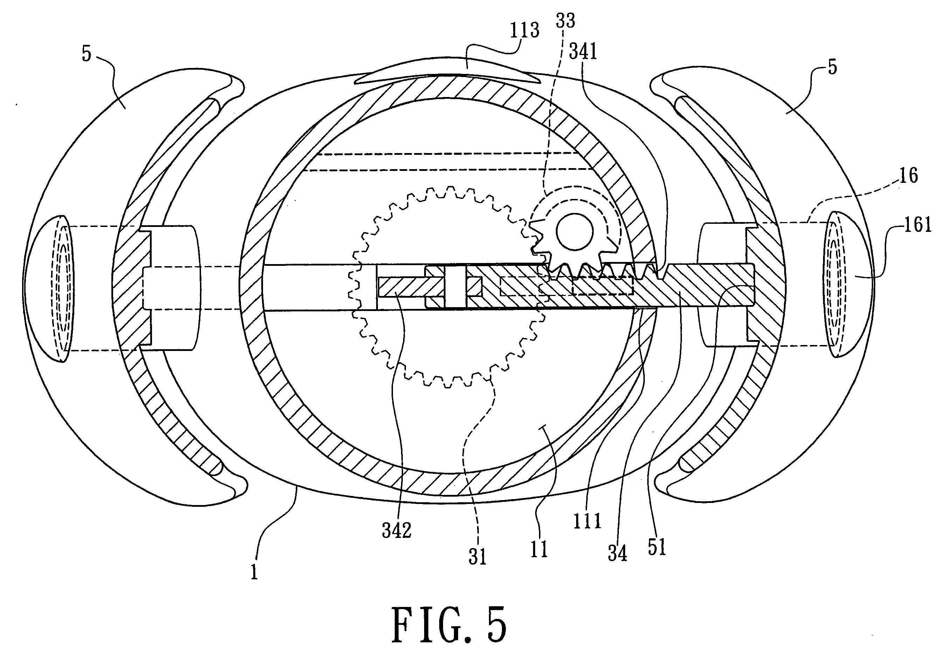

Fig. 5 is a horizontal section of the grinder of the invention, and
Fig. 6 is a vertical sectional view of the present seasoning grinder with a cover being removed for seasoning to be poured in.

### DETAILED DESCRIPTION OF THE PREFERRED EMBODIMENTS

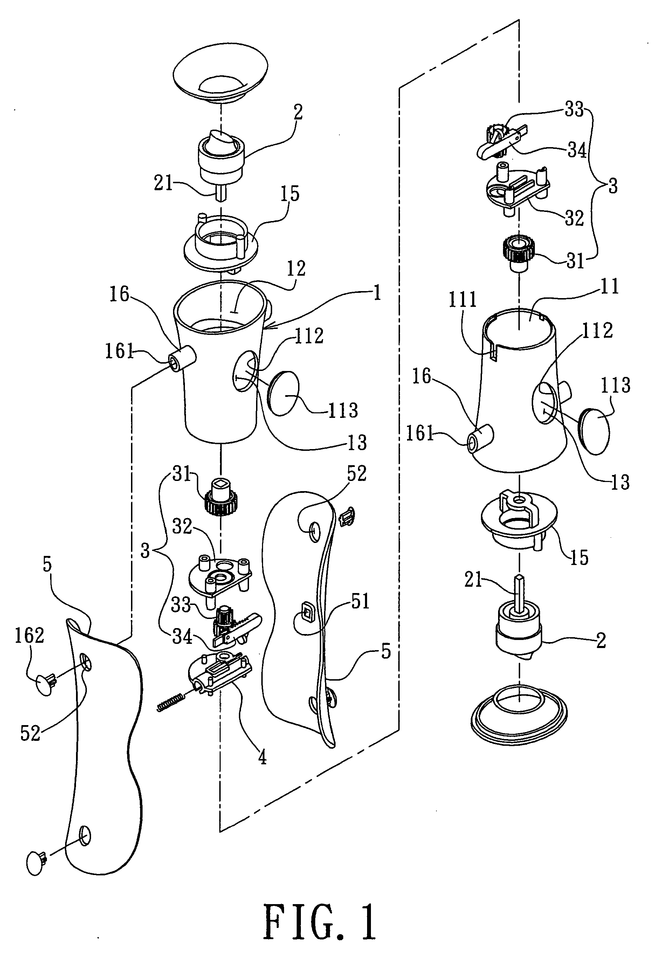

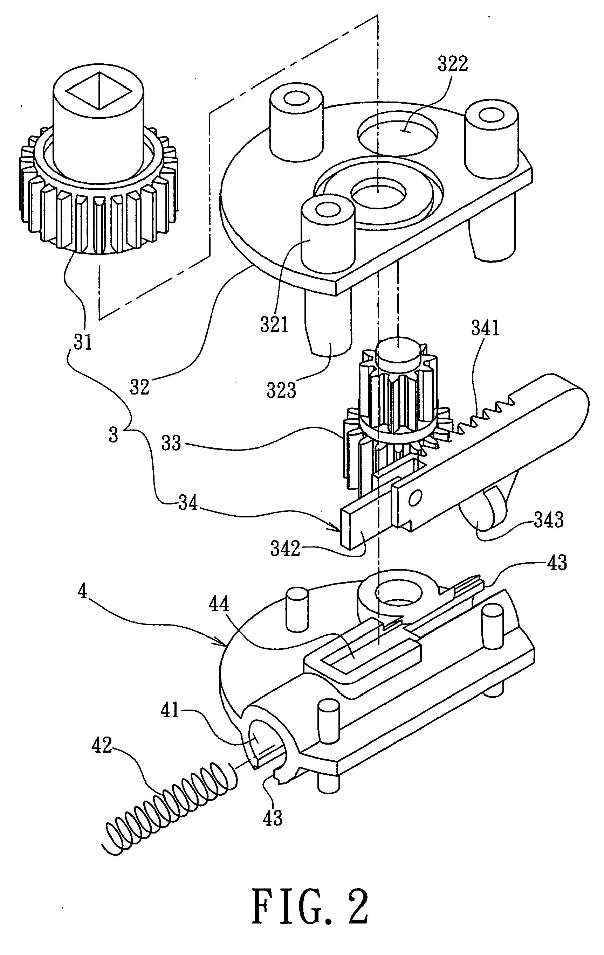

Referring to Figs. 1 and 2, a preferred embodiment of a dual-purpose grinder for seasoning includes two containing parts 1, two grinding mechanisms 2, two transmission mechanisms 3, a separating member 4, and two lateral pressed members 5.

Each containing part 1 has a first containing room 11 in a first end, a second containing room 12 in a second end, a middle separating wall (not numbered) therein, a holding room 13 between the middle separating wall and the first containing room 11, a lateral hole 112 communicating with the holding room 13, a cover 113, a passage 14 on the middle separating wall, and two connecting bar portions 16 pointing in opposite directions on the outer side, each of which connecting bar portions 16 has a cavity 161; the lateral hole 112 can be closed by means of fitting the cover 113 therein. Furthermore, each containing part 1 has a gap 111 at the first end, and has a securing member 15 securely held in the second containing room 12 thereof.

Each grinding mechanism 2 includes a shaft 21, an inner grinding wheel 22, and an outer grinding wheel 23 around the inner grinding wheel 22; the shaft 21 has a polygonal portion, and the inner grinding wheel 22 is securely connected to the polygonal portion of the shaft 21; seasoning can be ground in each of the grinding mechanisms 2 when the inner grinding wheel 22 is turned relative to the outer grinding wheel 23. The grinding mechanisms 2 are connected to respective ones of the containing parts 1 with the outer grinding wheels 23 being secured to the corresponding securing members 15, and with the inner grinding wheels 22 being positioned within the outer grinding wheels 23, and with the shafts 21 being passed through the corresponding passages 14 of the middle separating walls of the containing parts 1.

Each transmission mechanism 3 includes a single-directional ratchet 31, a separating unit 32, an actuating pinion 33, and a linearly displaceable member 34. The single-directional ratchets 31 are respectively held in the first containing rooms 11 of the containing parts 1, and respectively connected to the polygonal portions of the shafts 21 of the grinding mechanisms 2 at polygonal holes thereof; thus, the shafts 21 will turn as soon as the corresponding single-directional ratchets 31 are turned.

Each separating unit 32 has three first connecting posts 321 on one side, a hole 322, and three second connecting posts 323 on the other side. The separating units 32 are respectively held in the first containing rooms 11 of the containing parts 1 and securely connected to the middle separating walls of the containing parts 1 at first connecting posts 321 thereof; thus, the single-directional ratchets 31 are respectively confined between the middle separating walls and the separating units 32, and they are turnably connected to the separating units 32. Each actuating pinion 33 has first and second pinion portions 331 and 332. The actuating pinions 33 are passed through the holes 322 of the separating units 32, and engage the single-directional ratchets 31 respectively at the first pinion portions 331 thereof.

Each linearly displaceable member 34 has a rack portion 341, a bar 342 pivoted to a first end thereof, a second end, and a pressing portion 343. The linearly displaceable parts 34 are respectively held in the first containing rooms 11 of the containing parts 1, and passed through the gaps 111 at the second ends thereof, and they are engaged with the second pinion portions 332 of the actuating pinions 33 respectively at the rack portions 341 thereof.

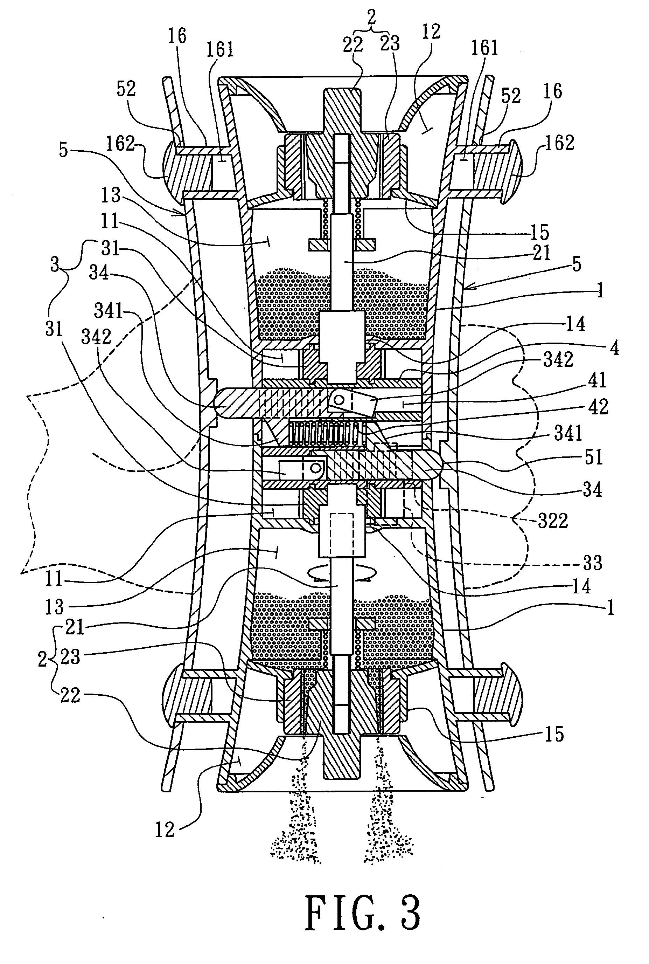

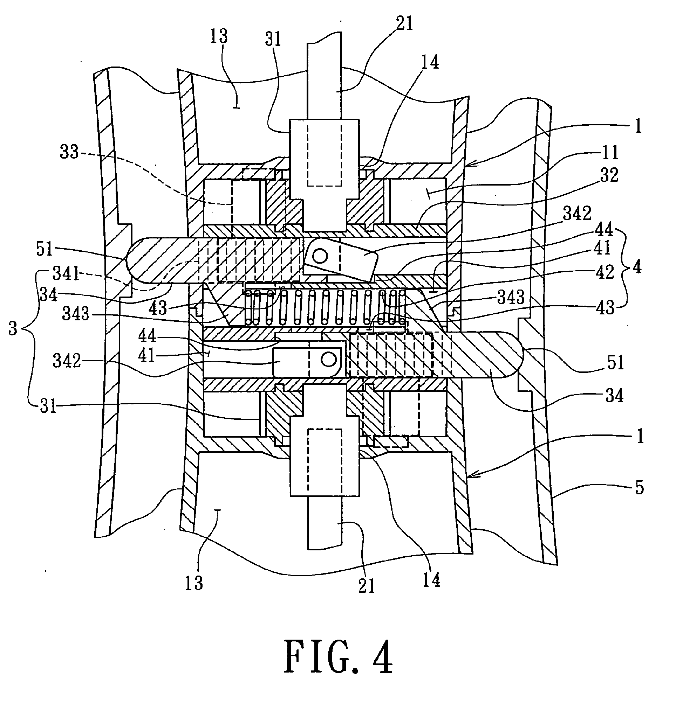

The separating member 4 has connecting posts (not numbered) on two sides, a holding tunnel 41, an elastic element 42 held in the holding tunnel 41, a stopping portion 44 on each of the two sides, and two slots 43, which communicate with the holding tunnel 41 and face opposite directions. The containing parts 1 are joined together at the first ends thereof, and the separating member 4 is securely connected to the second connecting posts 323 of both of the separating units 32 at the connecting posts thereof. Furthermore, the actuating pinions 33 are turnably connected to the separating member 4 at the second pinion portions 332 thereof, and the linearly displaceable members 34 are passed into first and second ends of the holding tunnel 41 of the separating member 4 respectively at the pressing portions 343 thereof such that the bars 342, which are pivoted to the first ends of the linearly displaceable members 34, are near to respective ones of the two stopping portions 44 of the separating member 4; when the present grinder is positioned upright, an upper one of the bars 342 will pivot downwards and engage the corresponding stopping portion 44 owing to gravity while a lower one of the bars 342 won't engage the corresponding stopping portion 44, as shown in Figs. 3 and 4.

Each lateral pressed member 5 has a limiting portion 51 on an inward side, and holes 52 on upper and lower end portions thereof. The lateral pressed members 5 are connected to the coupled containing parts 1 and 1, facing in opposite directions, with the connecting bar portions 16 of the containing parts 1 being passed through respective ones of the holes 52, and with the inward limiting portions 51 respectively touching the second ends of the linearly displaceable members 34. And, stopping elements 162 are securely fitted in the cavities 161 of the connecting bar portions 16 to prevent the lateral pressed members 5 from separating from the coupled containing parts 1 and 1. Thus, the lateral pressed members 5 can be pressed to move close to the coupled containing parts 1 and 1, thus causing the corresponding linearly displaceable members 34 to move so as to compress the elastic element 42 held in the holding tunnel 41 of the separating member 4. Consequently, the lateral pressed members 5 will move to and fro relative to the coupled containing parts 1 and 1 when one person presses and loosens the lateral pressed members 5 repeatedly.

Therefore, referring to Figs. 3 and 4, when the present seasoning grinder is positioned upright, and when the user presses and loosens the lateral pressed members 5 repeatedly, an upper one of the linearly displaceable members 34, which are held in an upper one of the containing parts 1, won't move, and the corresponding lateral pressed member 5, which touches the second end of the upper linearly displaceable member 34 at the limiting portion 51, can't move to and fro relative to the coupled containing parts 1 and 1. And, the other lateral pressed member 5, which touches the second end of a lower one of the linearly displaceable members 34 at the limiting portion 51, will move to and fro relative to the coupled containing parts 1 and 1 because the bar 342 of the lower linearly displaceable member 34 doesn't engage the corresponding stopping portion 44 of the separating member 4. Consequently, the rack 341 of the lower linearly displaceable member 34 causes the corresponding actuating pinion 33 to turn, and a lower one of the grinding mechanisms 2 start to grind a first kind of seasoning that has already been poured into the holding room 13 of the lower containing part 1. In order to grind a second kind of seasoning in the holding room 13 of the other containing part 1, the user should turn the seasoning grinder upside down, and press and release the lateral pressed members 5 repeatedly.

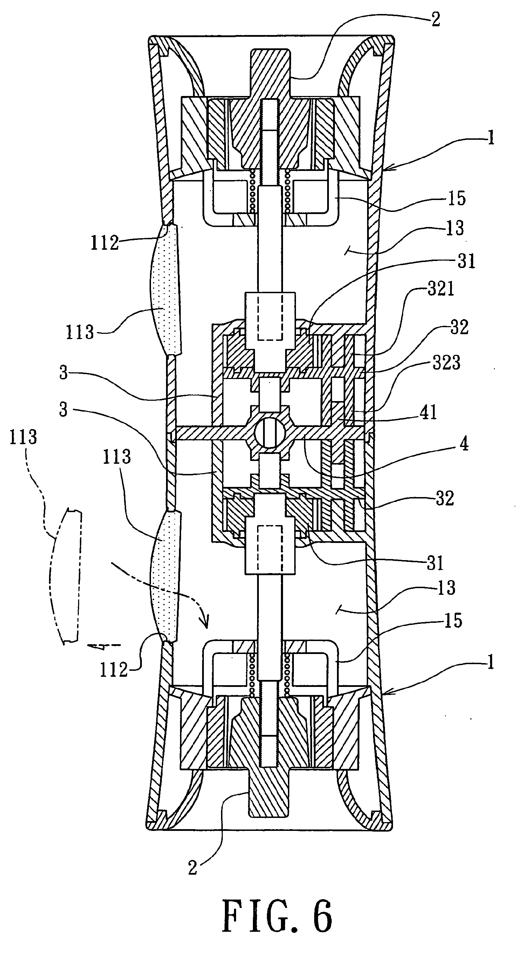

Referring to Fig. 6, to pour seasoning into the holding rooms 13 of the containing parts 1, the user should first remove the covers 113 from the lateral holes 112.

From the above description, it can be seen that the seasoning grinder of the present invention can be used by means of pressing and releasing the lateral pressed members repeatedly with a single hand, and two different kinds of seasonings can be stored in the grinder at the same time, and separately ground. Therefore, the seasoning grinder of the present invention is convenient to use.

## Claims

1. A dual-purpose grinder for seasoning, comprising
two grinding mechanisms; each grinding mechanism including a shaft, an inner grinding wheel securely connected to the shaft, and an outer grinding wheel around the inner grinding wheel;
two transmission mechanisms;
two containing parts joined together at first ends thereof; each containing part holding a respective grinding mechanism in a second end thereof; each containing part holding a respective transmission mechanism in the first end thereof; the outer grinding wheels of the grinding mechanisms being secured in the respective containing parts; each containing part having a holding room between the grinding mechanism and the transmission mechanism for holding seasoning therein;
each transmission mechanism including:
(a) a single-directional ratchet securely connected to a corresponding shaft of the grinding mechanisms;
(b) a separating unit securely held in a respective containing part; the separating unit having a hole thereon; the single-directional ratchet being turnably connected to the separating unit;
(c) an actuating pinion passed through the hole of the separating unit; the actuating pinion being engaged with the single-directional ratchet at a first end thereof; and
(d) a linearly displaceable member; the linearly displaceable member having a rack portion engaging a second end of the actuating pinion; the linearly displaceable member projecting out from a respective containing part at a second end thereof; the linearly displaceable member having a pressing portion;
a separating member; the separating member being positioned between the linearly displaceable members of both of the transmission mechanisms; the separating member being securely connected to the separating units of both of the transmission mechanisms; the actuating pinions of both the transmission mechanisms being turnably connected to the separating member at the second ends thereof; the separating member having a holding tunnel holding an elastic element therein; the separating member having two slots communicating with the holding tunnel and facing opposite directions; the linearly displaceable members being passed into first and second ends of the holding tunnel of the separating member respectively at the pressing portions thereof so as to touch two ends of the elastic element at the pressing portions; and
two lateral pressed members; the lateral pressed members being connected to the coupled containing parts and facing in opposite directions; the lateral pressed members being connected to the second ends of the linearly displaceable members respectively at inward sides thereof.

2. The dual-purpose grinder for seasoning as claimed in claim 1, wherein each of the containing parts has a lateral hole for allowing seasoning to pass through that is to be ground by the grinder, and each of the containing parts has a cover for closing the lateral hole thereof.

3. The dual-purpose grinder for seasoning as claimed in claim 1, wherein each of the containing parts has a plurality of connecting bar portions on an outer side, and the connecting bar portions are passed through the lateral pressed members, and stopping elements are connected to the connecting bar portions respectively such that the lateral pressed members can be moved only within a range defined by the connecting bar portions, and the lateral pressed members are stopped from separating from the containing parts by the stopping elements.

4. The dual-purpose grinder for seasoning as claimed in claim 1, wherein each of the containing parts has a securing member secured in the second end thereof, and a corresponding outer grinding wheel of the grinding mechanisms is secured in the securing member.

5. The dual-purpose grinder for seasoning as claimed in claim 1, wherein each linearly displaceable member has a bar pivoted to a first end thereof, and the separating member has a stopping portion on each of two sides thereof, which is next to a respective one of the bars of the linearly displaceable members such that one of the bars of the linearly displaceable members will pivot downwards owing to gravity and engage a corresponding stopping portion of the separating member when the coupled containing parts are held in such a position that said bar is above the corresponding stopping portion.
